# FASCICULE DE BREVET EUROPEEN

(11) **EP 0 368 726 B1**
(45) Date de publication et mention de la délivrance du brevet: **09.06.1993**
(21) Numéro de dépôt: 89403016.2
(22) Date de dépôt: 02.11.1989
(51) Int. Cl.: B65G 47/252

(54) **Dispositif redresseur de flacons**
Vorrichtung zum Aufrichten von Flakons
Apparatus for uprighting bottles

(30) Priorité: 09.11.1988 FR 8814627
(43) Date de publication de la demande: 16.05.1990
(73) Titulaire: A.T.M. (Société à responsabilité limitée), F-93700 Drancy (FR)
(72) Inventeur: Gomez, Robert, F-93700 Drancy (FR)
(74) Mandataire: Laget, Jean-Loup

(56) Documents cités:
- EP-A- 0 030 304
- EP-A- 0 202 148
- DE-A- 1 757 702
- FR-A- 2 083 158
- FR-A- 2 223 273
- US-A- 2 593 627

## Description

L'invention concerne un dispositif redresseur de flacons, notamment applicable aux convoyeurs de flacons en verre.

Dans certains processus industriels, par exemple des processus de stérilisation, des flacons, de forme générale cylindrique, sont disposés couchés. En sortie de machine de stérilisation, les flacons couchés sont transportés sur des convoyeurs à courroies cylindriques, ou convoyeurs à cordes, puis ils sont redressés afin de se présenter debout au poste d'emballage un tel dispositif redresseur est connu du document EP-A- 0 202 148.. Pour redresser les flacons, on peut les faire tomber sur un autre transporteur à tapis placé sous l'extrémité du convoyeur à cordes. Dans le cas de flacons en verre remplis de liquide, la chute du flacon sur le tapis provoque la rupture du verre et l'éclatement du flacon, d'autant plus que le flacon sortant de la machine de stérilisation est soumis à des contraintes thermiques et mécaniques, et d'autant plus encore que le tapis est métallique pour des raisons d'hygiène et de facilité de nettoyage.

Le document FR-A- 2 223 273 décrit un dispositif pour l'orientation successive d'une série de récipients de faible poids.

Ce dispositif comporte une bande sans fin passant autour d'un ou plusieurs rouleaux, une roue composée de deux disques revêtus d'un matériau élastique et un organe de préhension muni d'une extrémité libre en forme de crochet ou de boucle pour orienter et faire tomber des bouteilles en matière plastique dans un couloir de transport pneumatique.

Ce dispositif prévu pour des bouteilles incassables n'est pas directement utilisable pour redresser des bouteilles ou flacons fragiles en verre, notamment remplis de liquide.

L'un des buts de l'invention est de proposer un dispositif redresseur de flacons susceptible d'éviter la chute des flacons sur le tapis et par conséquent susceptible d'éviter la casse.

L'invention a pour objet un dispositif redresseur de flacons transportés couchés par un convoyeur à cordes, et destinés à être transportés debout sur un transporteur à tapis placé sous l'extrémité du convoyeur à cordes, caractérisé en ce que, dans chaque poulie d'extrémité du convoyeur à cordes, il comporte de chaque côté de la poulie, de l'extrémité vers le centre, un flasque, une rondelle placée contre le flasque et un disque en caoutchouc susceptible de se déformer pour maintenir un flacon pendant sa rotation ; et au milieu de la poulie, un bras s'étendant verticalement depuis la hauteur de l'axe de la poulie jusqu'au niveau du tapis du transporteur de façon à guider le flacon jusqu'à sa position de dépôt sur le tapis.

Selon d'autres caractéristiques de l'invention :
- un galet pesant est placé au dessus de la poulie de façon à maintenir le flacon contre les cordes du convoyeur pendant sa pénétration dans la poulie;
- le galet est porté par un bras articulé sur un axe et sollicité vers le bas par un ressort;
- chaque poulie est constituée de deux demi-poulies symétriques fixées chacune à l'axe par l'intermédiaire d'une clavette , le déplacement axial relatif des deux clavettes entraînant le déplacement relatif correspondant des deux demi-poulies.

L'invention a également pour objet l'application de ce dispositif au redressement des flacons en verre.

A titre d'exemple on a représenté au dessin annexé :
Figure 1 : une vue en coupe axiale verticale du dispositif redresseur de flacons selon l'invention ;
Figure 2 : une vue latérale du dispositif redresseur de flacons selon l'invention ;

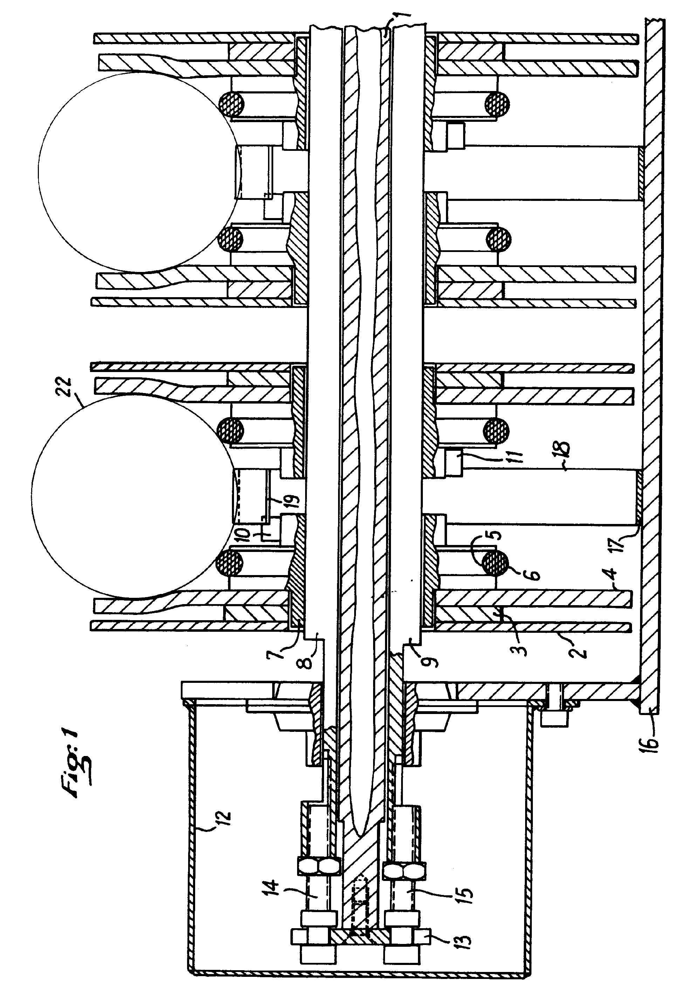

Le dispositif redresseur selon l'invention consiste en un aménagement particulier des poulies d'extrémité aval d'un convoyeur multiple à cordes. Dans l'exemple de la figure 1, deux éléments convoyeurs ont été représentés, mais ils peuvent être plus nombreux. De plus, le dispositif redresseur seon l'invention est susceptible de redresser des séries de flacons cylindriques de différents diamètres. A cet effet, il comporte un moyen de réglage de l'écartement des flasques des poulies.

En se reportant à la figure 1, on voit que le dispositif redresseur de flacons selon l'invention comporte un axe 1, par exemple entraîné par son extrémité non représentée, et sur lequel sont disposées des poulies constituées chacune de deux moitiés symétriques. Chaque demi-poulie comporte, de l'extérieur vers l'intérieur : un flasque métallique 2, une rondelle plastique 3, un disque de caoutchouc 4 de diamètre voisin de celui du flasque 2, et une gorge 5 dans laquelle se place la corde ou courroie cylindrique 6. Ces différents éléments sont portés par un moyeu 7.

L'axe 1 porte deux clavettes longitudinales 8 et 9 diamétralement opposées l'une à l'autre. Le moyeu 7 de la demi-poulie de gauche est solidarisé à la clavette 8 par un boulon 10̸. De la même manière, le moyeu de de la demi-poulie de droite est solidarisé à la clavette 9 par un boulon 11. De cette façon, chaque demi-poulie est fixée à une clavette. Les demi-poulies de gauche sont fixées à la clavette 8, et les demi-poulies de droite sont fixées à la clavette 9. Ainsi, un mouvement longitudinal relatif des deux clavettes 8 et 9 entraîne un mouvement correspondant des deux demi-poulies de chacune des poulies portées par l'axe 1. On peut ainsi régler l'écartement des flasques de chaque poulie pour l'adapter au diamètre des flacons à redresser.

Ce réglage de l'écartement des flasques, ou de la position relative des deux clavettes 8 et 9 s'effectue en bout d'axe. Sous le capot de protection 12, l'axe 1 porte à son extrémité une plaque 13 dans laquelle tourillonnent deux tiges filetées 14, 15.

Ces tiges filetées pénètrent dans l'extrémité taraudée des clavettes 8 et 9, respectivement. Par rotation des tiges filetées 14 et 15, on peut donc régler le déplacement longitudinal des clavettes 8 et 9. On règle ainsi l'écartement des disques de caoutchouc 4 à une valeur légèrement inférieure au diamètre du flacon 22 (figure 1).

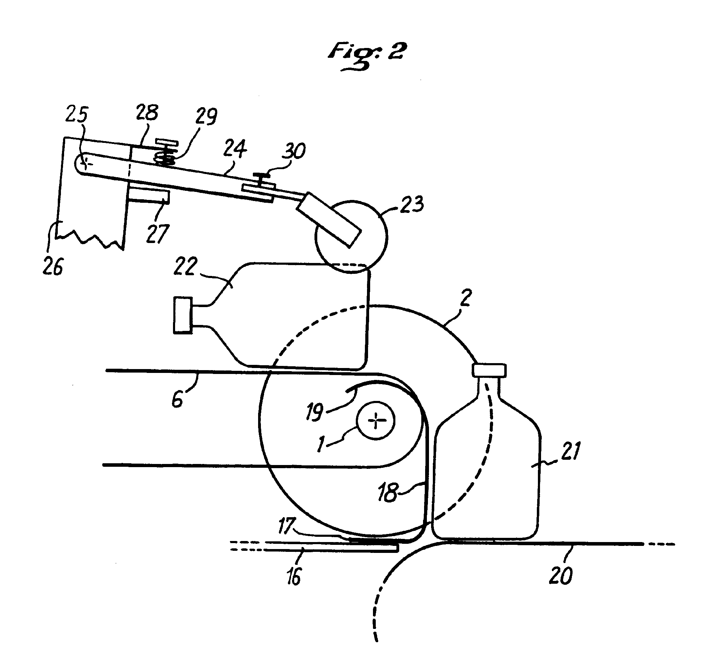

En se reportant à la figure 2, on voit un flasque 2 de poulie, une corde ou corroie cylindrique 6 acheminant un flacon 22 couché, et un flacon 21 redressé et prêt à être entraîné par un transporteur à tapis 20̸.

L'ensemble des poulies du convoyeur à cordes de la figure 1 est placé dans un châssis dont le fond 16 s'arrête au droit des poulies (figure 2). Sur ce fond 16 est disposée, pour chaque poulie, une rampe constituée d'un pied 17 de fixation au châssis et d'un bras 18 sensiblement perpendiculaire au fond du châssis, s'étendant verticalement jusqu'à hauteur de l'axe 1 des poulies et s'incurvant ensuite vers l'intérieur de la poulie pour se terminer par une extrémité 19 en dessous des brins supérieurs des cordes 6 du convoyeur.

L'extrémité supérieure de la partie verticale du bras 18, qui est prolongée par la partie incurvée dudit bras, se trouve pratiquement entre les deux cordes d'une poulie, à la hauteur de l'axe 1 par rapport au châssis.

Lorsqu'un flacon 22 arrive au voisinage de la poulie du convoyeur à cordes, il se présente avec le fond en avant (figure 2). Le fond puis le corps du flacon passent au dessus de l'extrémité 19 du bras 18. Le corps du flacon est progressivement pris entre les disques de caoutchouc 4 de la poulie qui se déforment comme représenté sur la figure 1. Pour assurer la saisie des flacons par les disques de caoutchouc, on dispose au dessus de chaque poulie du convoyeur à cordes un galet 23 de roulement, pesant, porté par un bras 24 susceptible de pivoter sur un axe 25, horizontal, porté par un étrier 26 solidaire du châssis 16. Cet étrier 26 présente une plaque inférieure 27 sur laquelle repose le bras 24 en l'absence de flacon, et une plaque supérieure 28 servant de butée à un ressort 29 ayant pour rôle de solliciter le bras 24 vers le bas. Le bras 24 est composé de deux parties coulissant l'une dans l'autre, et fixées l'une par rapport à l'autre par une vis 30̸ par exemple. La longueur du bras 24 est ainsi réglable en fonction du diamètre du flacon.

Lorsqu'un flacon 22 se présente, le galet pesant 23 le maintient contre les cordes du convoyeur, et pendant la déformation des disques de caoutchouc 4, évitant ainsi que le flacon ne soit repoussé vers l'extérieur de ces disques. Ainsi tenu par les disques déformés (figure 1) le flacon est entraîné par la poulie qui tourne d'un quart de tour et redresse le flacon en position verticale. Lorsque la poulie continue à tourner, le flacon vient en appui sur la partie verticale du bras 18 jusqu'à la position représentée en 21 sur la figure 2, tout en étant maintenu par les disques de caoutchouc 4. Au cours de sa descente verticale, le flacon est de moins en moins tenu par les disques de caoutchouc, si bien que lorsqu'il se pose sur le tapis 20̸, il n'est pratiquement plus tenu et se trouve entraîné par le tapis 20̸ vers le poste d'emballage. Le relâchement progressif du flacon par les disques assure que le flacon est posé sur le tapis 20̸ sans qu'il y ait de chute et donc de risque de cassure du flacon en verre.

Le réglage de l'écartement des demi-poulies est ajusté pour que le flacon soit maintenu sans être soit lâché au cours de sa descente, soit retenu après sa descente.

Le dispositif redresseur selon l'invention assure le dépôt du flacon sur le transporteur à tapis métallique en évitant un choc. Il faut en effet éviter non seulement le choc brutal qui provoque la rupture immédiate du flacon, mais encore le choc léger qui n'entraîne qu'une fêlure non décelable au poste d'emballage. Une telle fêlure entraîne un risque de fuite ultérieure et surtout une perte du caractère stérile du produit, ce qui est particulièrement grave pour les produits injectables par exemple.

Le dispositif redresseur a été décrit dans le cas d'un flacon, il est tout à fait adapté au cas des bocaux et des bouteilles en verre.

Lorsque les diamètres des flacons varient d'une série à l'autre, on procède au réglage préalable de l'écartement des flasques par réglage de la position relative des deux clavettes 8 et 9 sur l'axe 1, et le cas échéant au réglage de la longueur du bras télescopique 24 pour que le galet 23 appuie bien sur le flacon à redresser.

## Revendications

1. Dispositif redresseur de flacons transportés couchés par un convoyeur à cordes, et destinés à être transportés debout sur un transporteur à tapis placé sous l'extrémité du convoyeur à cordes, caractérisé en ce que, dans chaque poulie d'extrémité du convoyeur à cordes, il comporte : de chaque côté de la poulie, de l'extrémité vers le centre, un flasque (2), une rondelle (3) placée contre le flasque (2) et un disque (4) en caoutchouc susceptible de se déformer pour maintenir un flacon pendant sa rotation ; et au milieu de la poulie, un bras (18) s'étendant verticalement depuis la hauteur de l'axe de la poulie jusqu'au niveau du tapis (20) du transporteur de façon à guider le flacon jusqu'à sa position (21) de dépôt sur le tapis.

2. Dispositif selon la revendication 1, caractérisé en ce qu'un galet (23) pesant est placé au dessus de la poulie de façon à maintenir le flacon (21) contre les cordes du convoyeur pendant sa pénétration dans la poulie.

3. Dispositif selon la revendication 2, caractérisé en ce que le galet (23) est porté par un bras (24) articulé sur un axe (25) et sollicité vers le bas par un ressort (29).

4. Dispositif selon la revendication 1, caractérisé en ce que chaque poulie est constituée de deux demi-poulies symétriques fixées chacune à l'axe (1) par l'intermédiaire d'une clavette (8, 9), le déplacement axial relatif des deux clavettes (8, 9) entraînant le déplacement relatif correspondant des deux demi-poulies.

5. Application du dispositif selon l'une des revendication 1 à 4 au redressement des flacons en verre.

## Patentansprüche

1. Vorrichtung zum Aufrichten von Fläschchen, die durch einen Seilförderer liegend transportiert werden, und dazu bestimmt sind, danach auf einem Bandförderer transportiert zu werden, der unter dem Ende des Seilförderers angeordnet ist, dadurch gekennzeichnet, daß jede Endrolle des Seilförderers folgendes umfaßt: An jeder Seite der Rolle sind von außen nach innen eine Seitenscheibe (2), eine Beilagscheibe (3), die an der Seitenscheibe (2) angeordnet ist, und eine Gummischeibe (4), die sich verformen kann, um ein Fläschchen während ihrer Umdrehung festzuhalten, angeordnet, und in der Mitte der Rolle ist ein Arm (18) angeordnet, der sich vertikal von der Höhe der Achse der Rolle bis zu dem Niveau des Bandes (20) des Förderers erstreckt, um das Fläschchen bis zu seiner Position (21), in der es auf dem Band abgestellt ist, zu führen.

2. Vorrichtung nach Anspruch 1, dadurch gekennzeichnet, daß eine schwere Rolle (23) oberhalb der Rolle dergestalt angeordnet ist, daß sie das Fläschchen (21) gegen die Seile des Förderers festhält, während das Fläschchen in die Rolle eindringt.

3. Vorrichtung nach Anspruch 2, dadurch gekennzeichnet, daß die Rolle (23) von einem Arm (24) getragen wird, der auf einer Achse (25) gelagert ist, und mittels einer Feder (29) nach unten vorgespannt ist.

4. Vorrichtung nach Anspruch 1, dadurch gekennzeichnet, daß jede Rolle aus zwei symmetrischen Halbrollen aufgebaut ist, deren jede an der Achse (1) mittels eines Keils (8, 9) befestigt ist, so daß die relative axiale Verschiebung der beiden Keile (8, 9) eine entsprechende relative Verschiebung der beiden Halbrollen bewirkt.

5. Verwendung der Anordnung gemäß einem der vorhergehenden Ansprüche 1 bis 4 zum Aufrichten von Glasfläschchen.

## Claims

1. A device for righting bottles transported on their sides by a rope conveyor and intended to be transported upright on a belt conveyor located below the end of the rope conveyor, characterised in that, in each end pulley of the rope conveyor, it comprises: on either side of the pulley, of the end towards the centre, a side plate (2), a washer (3) placed against the side plate (2) and a rubber disc (4) which is capable of being deformed to hold a bottle during the rotation thereof; and in the centre of the pulley an arm (18) extending vertically from the height of the spindle of the pulley to the level of the belt (20) of the transporter so as to guide the bottle into its position (21) for depositing on the belt.

2. A device according to Claim 1, characterised in that a weighting roller (23) is placed above the pulley so as to hold the bottle (21) against the ropes of the conveyor during the penetration thereof into the pulley.

3. A device according to Claim 2, characterised in that the roller (23) is borne by an arm (24) which is articulated on a spindle (25) and acted on downwards by a spring (29).

4. A device according to Claim 1, characterised in that each pulley is formed of two symmetrical half-pulleys each fixed to the spindle (1) by means of a key (8, 9), the relative axial displacement of the two keys (8, 9) bringing about the corresponding relative displacement of the two half-pulleys.

5. The application of the device according to one of Claims 1 to 4 for the righting of glass bottles.
